# EUROPÄISCHE PATENTSCHRIFT

(11) **EP 0 689 014 B1**
(45) Veröffentlichungstag und Bekanntmachung des Hinweises auf die Patenterteilung: **07.10.1998**
(21) Anmeldenummer: 95109285.7
(22) Anmeldetag: 15.06.1995
(51) Int. Cl.: F25B 39/04

(54) **Einsatz für einen Kondensator einer Klimaanlage eines Fahrzeuges**
Insert for the condenser of an air conditionning system of a vehicle
Cartouche pour le condensateur d'un système de climatisation d'un véhicule

(30) Priorität: 22.06.1994 DE 4421834
(43) Veröffentlichungstag der Anmeldung: 27.12.1995
(73) Patentinhaber: Behr GmbH & Co., 70469 Stuttgart (DE)
(72) Erfinder: Burk, Roland, D-70469 Stuttgart (DE)
(74) Vertreter: Dauster, Hanjörg, Dipl.-Ing.

(56) Entgegenhaltungen:
- US-A- 3 443 367
- US-A- 3 881 546
- US-A- 5 159 821
- PATENT ABSTRACTS OF JAPAN vol. 018 no. 363 (M-1635) ,8.Juli 1994 & JP-A-06 094330 (ZEXEL CORP) 5.April 1994,
- PATENT ABSTRACTS OF JAPAN vol. 016 no. 376 (M-1294) ,12.August 1992 & JP-A-04 121562 (ZEXEL CORP) 22.April 1992,

## Beschreibung

Die Erfindung betrifft einen Einsatz für einen Kondensator einer Klimaanlage eines Fahrzeuges gemäß dem Patentanspruch 1.

Es ist bekannt (US-A 5 159 821), einem Kondensator für eine Kraftfahrzeugklimaanlage einen rohrförmigen Sammler zuzuordnen. In dem Sammler ist ein Filter angeordnet, oberhalb von welchem ein kornförmiges Trocknermaterial eingefüllt ist. Das Trocknermaterial wird mittels eines Abstandshalters etwas komprimiert, der zwischen dem Trocknermaterial und einem nicht lösbar an dem rohrförmigen Sammler befestigten oberen Verschluß eingespannt ist. Bei dieser Bauart sind Filter und Trockner nicht herausnehmbar und austauschbar. Wenn Filter und Trockner aus dem Sammler entfernt werden sollen, was eigentlich nur bei einer Entsorgung des Kondensators denkbar ist, so muß der obere Verschluß oder der rohrförmige Sammler zerstört werden. Dann erscheint es möglich, den rohrförmigen Sammler zusammen mit dem Kondensator auf den Kopf zu stellen, so daß Trockner und Filter herausfallen oder herausgeschüttelt werden können.

In einer nicht vorveröffentlichten, prioritätsälteren Druckschrift (EP-A 0 669 506) ist vorgeschlagen worden, in einem rohrförmigen Sammler, der parallel zu einem Sammelrohr des Kondensators angeordnet ist, einen austauschbaren Einsatz zwischen einem Boden und einem lösbaren Deckel einzusetzen. Der Einsatz ist aus zwei Teilen zusammengesetzt, von welchen der ein Filtersieb enthaltende, als Behälter für Trocknergranulat dienende Teil sich bis zu dem Deckel hin erstreckt.

Der Erfindung liegt die Aufgabe zugrunde, einen Einsatz zu schaffen, der besonders wirtschaftlich herstellbar ist und der nach einem Austausch nur einen geringen Entsorgungsumfang darstellt.

Diese Aufgabe wird durch den Patentanspruch 1 gelöst.

Die erfindungsgemäße Ausbildung gestattet zunächst eine kostengünstige, einfache Herstellung. Das aufwendiger herzustellende Teil, das das Filtersieb enthält, kann für mehrere Größen von Kondensatoren standardisiert werden, so daß es in großen Stückzahlen in gleicher Form hergestellt werden kann. Abhängig von der Größe des Kondensators und damit des Sammlers wird es durch ein Verlängerungsteil ergänzt, das eine relativ einfache Form aufweist und entsprechend mittels eines modular aufgebauten Werkzeuges kostengünstig in verschiedenen Längen hergestellt werden kann. Darüber hinaus führt die erfindungsgemäße Ausbildung zu einem geringeren Entsorgungsumfang, da es genügt, das Teil mit dem Filtersieb auszutauschen und zu entsorgen. Das Verlängerungsteil kann ohne weiteres nach einem Austausch des Teils mit dem Filtersieb wieder verwendet werden.

In vorteilhafter Ausgestaltung der Erfindung wird vorgesehen, daß die beiden Teile in axialer Richtung des Sammlers mittels einer trennbaren, formschlüssigen Verbindung miteinander verbunden sind. Dadurch ist es in einfacher Weise möglich, mittels des nach Lösen des Deckels zugänglichen Verlängerungsteils auch das das Filtersieb enthaltende Teil herauszuziehen.

Üblicherweise ist das Trocknergranulat in einem Säckchen angeordnet. In weiterer Ausgestaltung der Erfindung wird jedoch vorgesehen, daß der Behälter mit einem das Trocknergranulat zurückhaltenden Sieb versehen ist. Dadurch ist es möglich, das Trocknergranulat direkt in den Behälter einzuschütten und auf ein Säckchen zu verzichten.

In weiterer Ausgestaltung der Erfindung wird vorgesehen, daß das Verlängerungsteil mit einem in axialer Richtung federbelasteten Stempel in den rohrförmigen Behälter hineinragt. Dadurch ist es möglich, das Trocknergranulat, das lose in den Behälter eingeschüttet oder in einem Säckchen angeordnet ist, zusammenzudrücken und zu fixieren. Dies ist insbesondere bei Klimaanlagen von Fahrzeugen von Vorteil, da dann vermieden wird, daß aufgrund von Erschütterungen die Bestandteile des Trocknergranulates sich gegenseitig bewegen und so zu einem Materialabrieb führen.

In weiterer Ausgestaltung der Erfindung wird vorgesehen, daß der rohrförmige Behälter an seinem oberen Ende mit kranzartig angeordneten Federzungen versehen ist, die mit einem tellerartigen Ansatz des Verlängerungsteils verrastet sind. Dadurch läßt sich auf einfache Weise eine verrastende, formschlüssige Verbindung zwischen dem Behälter und dem Verlängerungsteil schaffen. Dabei ist es vorteilhaft, wenn die Federzungen im Bereich von Rastaufnahmen für den tellerartigen Ansatz des Verlängerungsteils mit sich an der Innenwandung des Sammlers abstützenden Verdickungen versehen sind. Diese Verdickungen stellen sicher, daß sich der tellerartige Ansatz innerhalb des Sammlers nicht von dem Behälter lösen kann, da die Federzungen nicht in radialer Richtung ausweichen können. Die formschlüssige Verbindung bleibt somit erhalten, solange der Bereich der Federzungen sich innerhalb des rohrförmigen Sammlers befindet.

Bei einer weiteren Ausgestaltung der Erfindung wird vorgesehen, daß das Verlängerungsteil als eine Stange ausgebildet ist, die an wenigstens einer Stelle mit sich an der Innenwandung des Sammlers abstützenden Führungselementen versehen ist. Ein derartiges Verlängerungsteil läßt sich sehr einfach bei geringem Materialaufwand herstellen, während es dennoch innerhalb des rohrförmigen Sammlers zentriert ist. In weiterer Ausgestaltung wird vorgesehen, daß wenigstens ein Führungselement als ein Federring ausgebildet ist, der in einer Axialebene der Stange angeordnet ist. Damit wird sichergestellt, daß die beiden Teile des Einsatzes zwischen dem Boden und dem Deckel des rohrförmigen Sammlers eingespannt werden. Darüber hinaus bietet der Federring den Vorteil, daß an ihm ein hakenförmiges Werkzeug sehr gut angesetzt werden kann, mit welchem der aus den beiden Teilen bestehende Einsatz aus dem rohrförmigen Sammler herausgezogen werden kann.

Weitere Merkmale und Vorteile der Erfindung ergeben sich aus der nachfolgenden Beschreibung der in der Zeichnung dargestellten Ausführungsform.
- Fig. 1: zeigt einen Axialschnitt durch einen rohrförmigen Sammler eines Kondensators mit einem erfindungsgemäßen Einsatz,
- Fig. 2: einen um 90° gedrehten Axialschnitt durch den Einsatz der Fig. 1 und
- Fig. 3: einen Schnitt entlang der Linie III-III der Fig. 2.

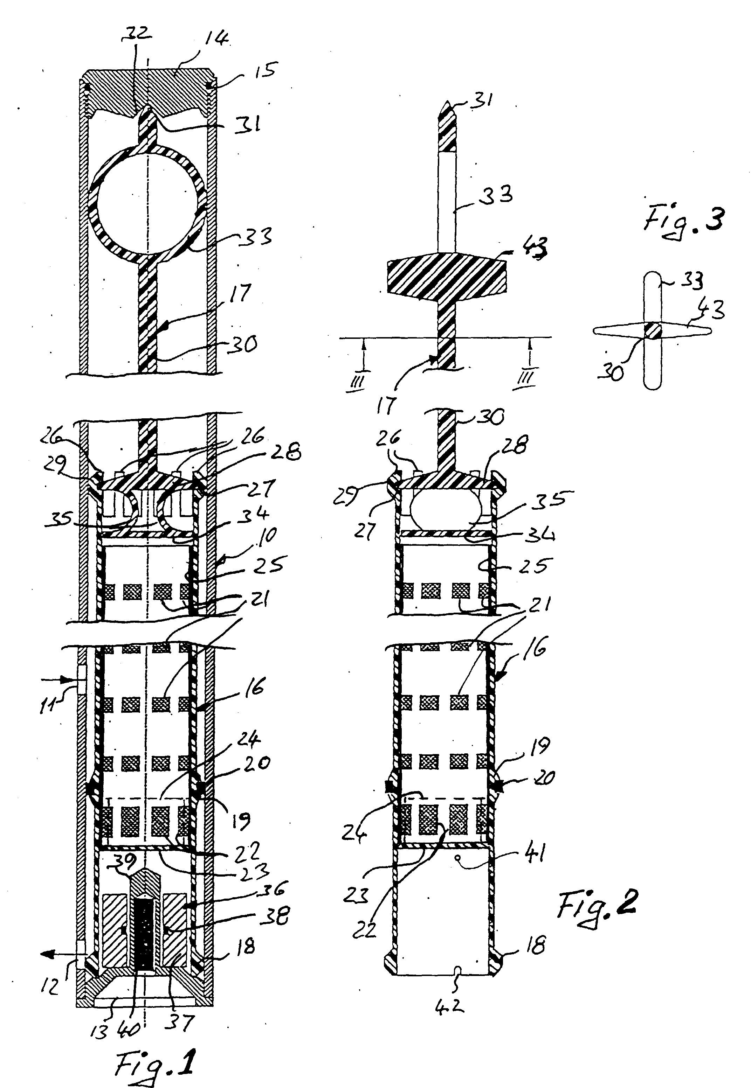

Der in Fig. 1 dargestellte rohrförmige Sammler (10) ist Bestandteil eines Kondensators einer Kälteanlage einer Klimaanlage eines Kraftfahrzeuges. Er ist beispielsweise so aufgebaut, wie dies in der deutschen Patentanmeldung P 44 02 927.6 offenbart ist. Der rohrförmige Sammler (10) ist an ein seitliches Sammelrohr eines Kondensators angesetzt, mit welchem er über eine Zuführöffnung (11) und eine Austrittsöffnung (12) verbunden ist. Der Sammler (10) ist mit einem eingesetzten durch Löten oder Hartlöten fest angebrachten Boden (13) und mit einem lösbaren Deckel (14) versehen. Der Deckel (14) ist mit einem Außengewinde versehen, das in ein Innengewinde des Sammlers eingeschraubt ist. Zwischen dem Deckel (14) und dem oberen Ende des Sammlers (10) ist außerdem ein Dichtungsring (15) angeordnet.

In den Sammler (10) ist ein Einsatz eingesetzt, der aus einem Behälter (16) und einem Verlängerungsteil (17) zusammengesetzt ist. Dieser Einsatz (16, 17) ist zwischen dem Boden (13) und dem Deckel (14) eingespannt. Der rohrförmige Behälter (16) ist als ein Kunststoffspritzteil aus zwei mittels eines Filmscharniers verbundenen Halbschalen zusammengesetzt oder auch in einem Stück hergestellt. Das untere, offene Ende, das sich auf dem Boden (13) abstützt, ist mit einem äußeren Ringwulst oder mehreren Verdickungen (18) in dem Sammler (10) zentriert. Der Behälter (16) ist zwischen der Zuführöffnung (11) und der Austrittsöffnung (12) des Sammlers (10) mit einem weiteren Ringwulst (19) versehen, der zur Verbesserung der Abdichtung eine Ringnut aufweist, in welche ein Dichtungsring (20) eingesetzt ist, der den Behälter (16) zur Innenwandung des Sammlers (10) hin abdichtet. Das Kältemittel muß somit durch den Behälter (16) strömen, der mit einer Vielzahl von Öffnungen (21) versehen ist. Ein Kranz von Öffnungen (22), die einen größeren Querschnitt als die Öffnungen (21) aufweisen, befindet sich unterhalb des Dichtungsringes (20) und oberhalb eines an den Behälter (16) angeformten Zwischenboden (23). Die Öffnungen (21) dienen somit als Eintrittsöffnungen für das Kältemittel und die Öffnungen (22) aus Austrittsöffnungen.

Im Bereich der Öffnungen (22) ist ein Filtersieb (24) mit einer Maschenweite von etwa 0,06mm bis 0,lmm angeordnet. Dieses Filtersieb (24) kann ein Filtervlies oder Nadelfilz sein.

Innerhalb des Behälters (16) ist eine nicht dargestellte Trocknergranulat- oder Kugelschüttung angeordnet, die bei einer ersten Ausführungsform in ein Säckchen aus Filtermaterial, z.B. Nadelfilz, eingefüllt ist. Bei einer anderen Ausführungsform wird das Trocknergranulat direkt in den Behälter (16) geschüttet. In diesem Fall ist der Behälter (16) innen mit einem Stützsieb (25) in dem Bereich von dem Zwischenboden (23) bis zu den obersten Öffnungen (21) oder mit entsprechend kleinen Öffnungen (21) versehen. Dieses Stützsieb ist mit dem aus Kunststoff, insbesondere Polyamid, hergestellten Behälter (16) umspritzt. Es kann aus Kunststoff oder aus Edelstahl bestehen, wobei ersteres den Vorteil der Recycelbarkeit besitzt.

Das Verlängerungsteil (17) ist mit dem Behälter (16) mittels einer lösbaren, formschlüssigen Verbindung verbunden. Von dem oberen Ende des Behälters (16) ragen in axialer Richtung eine Vielzahl von Federzungen (26) ab, die innen mit einer Rastausnehmung (27) versehen sind, die einen tellerartigen Ansatz (28) des Verlängerungsteils (17) aufnehmen. Die kranzartig angeordneten Federzungen (26) sind im Bereich der Rastaufnahmen (27) außen mit Verdickungen (29) versehen, mittels der sie an der Innenwandung des Sammlers (10) anliegen. Dadurch wird sichergestellt, daß sie sich in eingebautem Zustand des Einsatzes (16, 17) nicht nach außen bewegen können, so daß die Verbindung zwischen dem Behälter (16) und dem Verlängerungsteil (17) sich nicht lösen kann. Dadurch wird auch sichergestellt, daß das Verlängerungsteil (17) im Bereich der Federzungen (16) zentriert ist.

Das Verlängerungsteil (17) besteht im wesentlichen aus einer im Querschnitt runden Stange (30), deren oberes Ende als eine Spitze (31) ausgebildet ist, die in einer kegelförmigen Vertiefung (32) des Deckels (14) zentriert ist. Diese zentrische Abstützung hat den Vorteil, daß beim Anbringen oder Lösen des schraubbaren Deckels (14) kein nennenswertes Drehmoment auf den Einsatz übertragen wird, so daß die mechanische Torsionsbelastung des Einsatzes minimiert wird. In dem oberen Bereich dicht unterhalb der Spitze (31) ist die Stange (30) mit einem in der Axialebene liegenden Federring (33) versehen, dessen Außendurchmesser dem Innendurchmesser des Sammlers (10) derart angepaßt ist, daß eine geringfügige elastische Deformation vorhanden ist. Unmittelbar unterhalb des Federringes (33) sind zwei um 90° zu dem Federring (33) versetzte Führungsfahnen (43) vorgesehen, die die Stange (30) ebenfalls an der Innenwandung des Sammlers (10) abstützen. Das Verlängerungsteil (17) ist ebenfalls ein einteiliges Kunststofformteil, insbesondere ein Spritzteil, das ebenfalls aus Polyamid hergestellt sein kann.

Das Verlängerungsteil (16) ist unterhalb des tellerförmigen Ansatzes (28) mit einem federbelasteten Stempel (34) versehen, der in das Innere des Behälters (16) hineinragt. Bei dem Ausführungsbeispiel ist vorgesehen, daß dieser Stempel (34) an den tellerförmigen Ansatz (28) über zwei Blattfedern (35) angeformt ist. Der federbelastete Stempel (34) hat die Aufgabe, das in dem Behälter (16) befindliche Trocknergranulat zusammenzudrücken oder zusammenzupressen, so daß die einzelnen Granulatkörner sich auch bei Erschütterungen nicht mehr relativ zueinander bewegen. Dadurch wird verhindert, daß aufgrund dieser Erschütterungsbewegungen ein Granulatabrieb entsteht, der zu einer Verstopfung des Stützfilters (25) und/oder des Filtersiebes (24) führen könnte. Bei einer abgewandelten Ausführungsform wird vorgesehen, daß der Stempel (34) ein getrenntes Bauteil ist, das mittels einer metallischen Spiralfeder belastet ist, die anstelle der Blattfedern (35) zwischen dem tellerartigen Ansatz (28) und dem Stempel (34) angeordnet ist.

Mittels des Zwischenbodens (23) des Behälters (36) wird in dem unteren Bereich des Sammlers (10) eine Hohlkammer geschaffen, in welcher ein Füllstandssensor (36) angeordnet ist. Der Füllstandssensor (36) besteht aus einem in dieser Hohlkammer angeordneten Schwimmer (37), der einen Magnetring (38) trägt und der auf einem axialen, nach innen gerichteten Zapfen (39) des Bodens (13) geführt ist. In dem hohlen Zapfen (39) ist ein dem Magnetring (38) des Schwimmers (37) zugeordneter Aufnehmer (40) angeordnet, insbesondere ein Reed-Schalter. Damit das Kältemittel in die zwischen dem Zwischenboden (23) und dem Boden (13) des Sammlers (10) befindliche Hohlkammer gelangt, ist der Behälter in diesem Bereich mit wenigstens einer und vorzugsweise zwei Öffnungen (41, 42) versehen.

Aus den vorstehenden Ausführungen wird ersichtlich, daß der Behälter (16) mit dem Filtersieb (24) und dem gegebenenfalls vorhandenen Stützsieb (25) sowie dem darin angeordneten Trocknergranulat das Bauteil ist, das einen wesentlich höheren Herstellungsaufwand erfordert, als das Verlängerungsbauteil (17). Aufgrund der zweiteiligen Herstellung des Einsatzes aus Behälter (16) und Verlängerungsteil (17) ist es möglich, einen standardisierten Behälter (16) mit immer gleicher Größe zu schaffen, der auch für unterschiedlich große (hohe) Kondensatoren eingesetzt werden kann. Diesem standardisierten Behälter (16) wird dann jeweils ein Verlängerungsteil (17) zugeordnet, das der jeweiligen Kondensatorgröße (axiale Länge des Sammlers (10)) entspricht. Dadurch läßt sich einerseits die Herstellung verbilligen, da der entsprechend teurere Behälter (16) ein standardisiertes Bauteil ist. Darüber hinaus ergibt sich der Vorteil, daß bei einem Austausch nur der Behälter (16) mit dem Filtersieb (24) und gegebenenfalls dem Stützsieb (25) sowie dem Trocknergranulat ausgetauscht werden muß, während das Verlängerungsteil (17), das nach Ausbau des Einsatzes sehr einfach von dem Behälter (16) zu trennen und wieder mit diesem zu verbinden ist, wieder verwendet werden kann. Auch wenn in der Praxis eventuell der gesamte Einsatz (16, 17) ausgetauscht werden sollte, so ergibt sich der Vorteil, daß nur der Behälter (16) zu entsorgen ist, so daß der Aufwand für die Entsorgung wesentlich verringert ist.

## Patentansprüche

1. Einsatz für einen Kondensator einer Klimaanlage eines Fahrzeuges, wobei der Einsatz in einen rohrförmigen Sammler (10) des Kondensators zwischen einem Boden (13) und einem lösbaren Deckel (14) einsetzbar ist, ein von dem Kältemittel durchströmtes Filtersieb (24) enthält und aus zwei Teilen (16, 17) zusammengesetzt ist, von welchen ein erster Teil (16) das Filtersieb enthält und als ein rohrförmiger, mit einer Vielzahl von Öffnungen (21, 22) versehener Behälter für Trocknergranulat gestaltet ist, der außen mit einem sich an die Innenwandung des Sammlers (10) anlegenden Dichtungsring (20) versehen ist, der oberhalb von wenigstens eines Teils der Öffnungen (22) angeordnet ist, und von welchem ein zweites Teil als ein den Abstand von dem ersten Teil (16) zu dem Deckel (14) überbrückendes Verlängerungsteil (17) ausgebildet ist.

2. Einsatz nach Anspruch 1, dadurch gekennzeichnet, daß die beiden Teile (16, 17) in axialer Richtung des Sammlers (10) mittels einer trennbaren, formschlüssigen Verbindung miteinander verbunden sind.

3. Einsatz nach Anspruch 1 oder 2, dadurch gekennzeichnet, daß der Behälter (16) mit einem das Trocknergranulat zurückhaltenden Sieb (25) versehen ist.

4. Einsatz nach einem der Ansprüche 1 bis 3, dadurch gekennzeichnet, daß der Dichtungsring (20) oberhalb eines Zwischenbodens (23) des Behälters (16) angeordnet ist.

5. Einsatz nach Anspruch 1, dadurch gekennzeichnet, daß die unterhalb des Dichtungsringes (20) befindlichen Öffnungen (22) des rohrförmigen Behälters mit einem Feinfilter (24) versehen sind.

6. Einsatz nach einem der Ansprüche 1 bis 5, dadurch gekennzeichnet, daß das Verlängerungsteil (17) mit einem in Axialrichtung federbelasteten Stempel (34) in den rohrförmigen Behälter (16) hineinragt.

7. Einsatz nach einem der Ansprüche 1 bis 6, dadurch gekennzeichnet, daß der rohrförmige Behälter (16) an seinem oberen Ende mit kranzartig angeordneten Federzungen (26) versehen ist, die mit einem tellerartigen Ansatz (28) des Verlängerungsteils (17) verrastet sind.

8. Einsatz nach Anspruch 7, dadurch gekennzeichnet, daß die Federzungen (26) im Bereich von Rastaufnahmen (27) für den tellerartigen Ansatz (28) des Verlängerungsteils (17) mit sich an der Innenwandung des Sammlers (10) abstützenden Verdickungen (29) versehen sind.

9. Einsatz nach einem der Ansprüche 1 bis 8, dadurch gekennzeichnet, daß das Verlängerungsteil (17) mit einer Aufnahme (33) für ein hakenförmiges Werkzeug versehen ist.

10. Einsatz nach einem der Ansprüche 1 bis 9, dadurch gekennzeichnet, daß das Verlängerungsteil (17) als eine Stange (30) ausgebildet ist, die an wenigstens einer Stelle mit sich an der Innenwandung des Sammlers (10) abstützenden Führungselementen (33, 43) versehen ist.

11. Einsatz nach Anspruch 10, dadurch gekennzeichnet, daß wenigstens ein Führungselement als ein Federring (33) ausgebildet ist, der in einer Axialebene der Stange (30) angeordnet ist.

12. Einsatz nach einem der Ansprüche 1 bis 11, dadurch gekennzeichnet, daß der rohrförmige Behälter (16) und/oder das Verlängerungsteil (17) als Kunststofformteil hergestellt sind.

## Claims

1. An insert for a condenser of an air-conditioning system of a motor vehicle, in which the insert is inserted in a tubular manifold (10) of the condenser between a base (13) and a detachable cover (14), it contains a filter screen (24) through which the coolant flows and is made up of two parts (16, 17), a first part (16) which contains the filter screen and is designed as a tubular container for desiccant granulate provided with a plurality of orifices (21, 22), being fitted on the exterior with a sealing ring (20) which bears against the inside wall of the manifold (10) arranged above at least a part of the orifices (22), and a second part which is designed as an extension piece (17) bridging the distance from the first part (16) to the cover (14).

2. An insert as claimed in claim 1, characterised in that the two parts (16, 17) are joined to one another in the axial direction of the manifold (10) by means of a separable, positive-fit connection.

3. An insert as claimed in claim 1 or 2, characterised in that the container (16) is provided with a screen (25) for retaining the desiccant granulate.

4. An insert as claimed in one of claims 1 to 3, characterised in that the sealing ring (20) is arranged above an intermediate floor (23) of the container (16).

5. An insert as claimed in claim 1, characterised in that the orifices (22) of the tubular container located underneath the sealing ring (20) are provided with a fine-mesh filter (24).

6. An insert as claimed in one of claims 1 to 5, characterised in that the extension piece (17) projects into the tubular container (16) by means of a ram (34), spring-biassed in the axial direction.

7. An insert as claimed in one of claims 1 to 6, characterised in that the tubular container (16) is provided with flexible tongues (26) provided in a crown arrangement on its top end which locate with a plate-type shoulder (28) of the extension piece (17).

8. An insert as claimed in claim 7, characterised in that the flexible tongues (26) are provided with thicker sections (29) bearing on the inside wall of the manifold (10) in the region of locating rims (27) for the plate-type shoulder (28) of the extension piece (17).

9. An insert as claimed in one of claims 1 to 8, characterised in that the extension piece (17) is provided with a holder (33) for a hook-shaped tool.

10. An insert as claimed in one of claims 1 to 9, characterised in that the extension piece (17) is designed as a rod (30) which is provided at one point at least with guide elements (33, 43) bearing on the inside wall of the manifold 10).

11. An insert as claimed in claim 10, characterised in that at least one guide element is a spring clip (33), which is arranged in an axial plane of the rod (30).

12. An insert as claimed in one of claims 1 to 11, characterised in that the tubular container (16) and/or the extension piece (17) are made as moulded components of synthetic material.

## Revendications

1. Cartouche pour le condenseur d'une installation de climatisation d'un véhicule, la cartouche étant susceptible d'être insérée dans un collecteur (10) à forme tubulaire du condenseur, entre un fond (13) et un couvercle (14) désolidarisable, contenant un tamis de filtrage (24) traversé par l'écoulement de l'agent réfrigérant et étant constituée de deux parties (16, 17), dont une première partie (16) contient le tamis de filtrage et est configurée sous la forme d'un récipient tubulaire, doté d'une pluralité d'ouvertures (21, 22), pour du granulat sécheur, et qui est pourvu extérieurement d'une bague d'étanchéité (20) placée en appui sur la paroi intérieure du collecteur (10) et disposée au-dessus d'au moins une partie des ouvertures (22), et dont une deuxième partie est réalisée sous la forme d'une partie de prolongement (17) pontant l'espacement entre la première partie (16) et le couvercle (14).

2. Cartouche selon la revendication 1, caractérisée en ce que les deux parties (16, 17) sont reliées ensemble en direction axiale du collecteur (10) au moyen d'une liaison à ajustement de forme, avec une possibilité de dissociation.

3. Cartouche selon la revendication 1 ou 2, caractérisée en ce que le récipient (16) est doté d'un tamis (25) retenant le granulat sécheur.

4. Cartouche selon l'une des revendications 1 à 3, caractérisée en ce que la bague d'étanchéité (20) est disposée au-dessus d'un fond intermédiaire (23) du récipient (16).

5. Cartouche selon la revendication 1, caractérisée en ce que les ouvertures (22), se trouvant au-dessous de la bague d'étanchéité (20), du récipient tubulaire sont dotées d'un filtre fin (24).

6. Cartouche selon l'une des revendications 1 à 5, caractérisée en ce que la partie de prolongement (17) pénètre dans le récipient tubulaire (1) par un plongeur (34) chargé par un ressort, en direction axiale.

7. Cartouche selon l'une des revendications 1 à 6, caractérisée en ce que le récipient tubulaire (16) est pourvu, à son extrémité supérieure, de languettes élastiques (26) disposées à la façon d'une couronne, qui sont encliquetées avec un appendice (28) en forme de collerette de la partie de prolongement (17).

8. Cartouche selon la revendication 7, caractérisée en ce que les languettes élastiques (26) sont pourvues, dans la zone des logements d'encliquetage (27) destinés à l'appendice (28) du genre d'une collerette de la partie de prolongement (17), d'épaississements (29) prenant appui sur la paroi intérieure du collecteur (10).

9. Cartouche selon l'une des revendications 1 à 8, caractérisée en ce que la partie de prolongement (17) est dotée d'un logement (33) destiné à un outil en forme de crochet.

10. Cartouche selon l'une des revendications 1 à 9, caractérisée en ce que la partie de prolongement (17) est réalisée sous la forme d'une barre (30) qui est dotée, en au moins un emplacement, d'éléments de guidage (33, 43) prenant appui sur la paroi intérieure du collecteur (10).

11. Cartouche selon la revendication 10, caractérisée en ce qu'au moins un élément de guidage est réalisé sous la forme d'une bague élastique (33) qui est disposée dans un plan axial de la barre (30).

12. Cartouche selon l'une des revendications 1 à 11, caractérisée en ce que le récipient tubulaire (16) et/ou la partie de prolongement (17) est fabriqué sous la forme d'une pièce moulée en matière plastique.
